(19) Europäisches Patentamt
European Patent Office
Office européen des brevets

(11) **EP 2 648 949 B1**

(12) **EUROPÄISCHE PATENTSCHRIFT**

(45) Veröffentlichungstag und Bekanntmachung des Hinweises auf die Patenterteilung:
**12.08.2015   Patentblatt 2015/33**

(51) Int Cl.:
***B60T 8/17*** *(2006.01)*     ***B60T 8/32*** *(2006.01)*

(21) Anmeldenummer: **11793769.8**

(22) Anmeldetag: **06.12.2011**

(86) Internationale Anmeldenummer:
**PCT/EP2011/071917**

(87) Internationale Veröffentlichungsnummer:
**WO 2012/076523 (14.06.2012 Gazette 2012/24)**

(54) **VERFAHREN ZUR STEUERUNG EINER GLEITSCHUTZGEREGELTEN REIBUNGSBREMSANLAGE EINES SCHIENENFAHRZEUGS**

METHOD FOR CONTROLLING AN ANTISKID-REGULATED FRICTION BRAKE SYSTEM OF A RAIL VEHICLE

PROCÉDÉ DE COMMANDE D'UN SYSTÈME DE FREIN À FRICTION RÉGULÉ ANTIPATINAGE D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010   DE 102010053683**

(43) Veröffentlichungstag der Anmeldung:
**16.10.2013   Patentblatt 2013/42**

(73) Patentinhaber: **KNORR-BREMSE Systeme für Schienenfahrzeuge GmbH 80809 München (DE)**

(72) Erfinder:
• HERDEN, Marc-Oliver
  81377 München (DE)
• ENGLBRECHT, Matthaeus
  81249 München (DE)

(56) Entgegenhaltungen:
WO-A1-01/92076          GB-A- 2 402 983
US-A1- 2004 046 442

**Beschreibung**

Stand der Technik

Die Erfindung geht aus einem Verfahren zur Steuerung einer Notbremseinrichtung eines Schienenfahrzeugs oder eines aus mehreren Schienenfahrzeugen bestehenden Schienenfahrzeugzugs, welches oder welcher eine Anzahl von durch Reibungsbremsen gebremsten Achsen aufweist, gemäß Anspruch 1 sowie von einer nach diesem Verfahren gesteuerten Notbremseinrichtung gemäß Anspruch 7.

Eine derartige Notbremseinrichtung ist zum Beispiel aus der US 2004 046 442 A1 bekannt.

Bei Schienenfahrzeugen erfolgt die Übertragung von Brems- und Beschleunigungskräften am Rad/Schiene-Kontaktpunkt. Dort erfolgt die Übertragung durch Reibschluss mittels zwischen aus Stahl bestehenden Bauteilen wirkenden Bremsreibungskräften. Eine weitere wichtige Reibpaarung stellt der Kontakt zwischen den Bremsbelägen und Bremsscheibe bzw. zwischen Bremsklötzen und der Radlauffläche dar, welcher im Falle der Bremsung maßgebend ist. Die Reibungsverhältnisse dieser Reibschlüsse sind aber unter anderem von der Temperatur, dem Verschmutzungsgrad und der Relativgeschwindigkeit abhängig.

Einen wesentlichen Einflussfaktor bildet der Kraftschlusswert, welcher vom momentanen Schlupf zwischen Rad und Schiene abhängt. Der Kraftschlusswert kann beispielsweise durch die Gleitreibungszahl f oder durch die Haftreibungszahl f gebildet werden, wobei beide Kennzahlen das Verhältnis der Haftoder Gleitreibungskraft $F_f$ zur wirkenden Normalkraft $F_n$ bezeichnen :

$$f \cong \frac{F_f}{F_n}$$

Bei einem niedrigen Schlupf liegt das Maximum des Kraftschlusswerts. Erhöht sich der Schlupf dann weiter, sinkt der Kraftschlusswert wieder. Wird der Schlupf dann noch weiter erhöht, kann es durch die dabei immer höher werdende Reibleistung zu einer Erwärmung des Rads und der Schiene kommen, die bewirkt, dass feuchte, rutschige Schienen gereinigt werden und sich dadurch der Haftwert insbesondere für nachfolgende Räder sehr stark verbessert. Idealerweise sollte ein Gleitschutzsystem den Schlupf der Räder genau so einstellen, dass ein maximaler Kraftschlusswert vorliegt. Da ein Radsatz eines Schienenfahrzeugs wegen der Konizität der Räder niemals gerade in Schienenlängsrichtung rollt, sondern immer kleine Drehbewegungen um die Hochachse (Sinuslauf) ausführt, wird beispielsweise der in Längsrichtung ausnutzbare Haftwert reduziert.

Weiterhin hängt der Kraftschlusswert in starkem Maße sowohl hinsichtlich seiner Höhe als auch hinsichtlich seines Verlaufs von den zwischen Rad und Schiene vorhandenen Verunreinigungen wie Wasser, Öl, Oxidschichten, Laub etc. aber auch von der momentanen Fahrgeschwindigkeit ab. In Abhängigkeit von der Fahrgeschwindigkeit zeigt der Kraftschlusswert eine fallende Tendenz. Insbesondere im Herbst, wenn Blätter auf den Schienen liegen, entsteht dort ein Schmierfilm, der dazu führt, dass die betrieblich erforderte Bremsleistung nicht mehr ausreicht. Die Schiene wird dabei so glatt, dass die erreichbare Bremskraft sehr gering ist und gegebenenfalls Räder beim Bremsen durchrutschen.

Dabei kann es passieren, dass während einer Bremsung die Bremskraft größer eingestellt wird als die am Aufstandspunkt maximal übertragbare Bremsreibungskraft, was dazu führt, dass die Räder einer oder mehrerer Achsen blockieren. In solchen Fällen kommt es durch die dann einsetzende Gleitreibung zu einer unerwünschten Flachstellenbildung sowie zu einer Reduzierung der übertragbaren Bremsreibungskräfte, weil der Reibungskoeffizient ausgehend von einem Maximum bei sehr geringer Relativgeschwindigkeit mit größerer Relativgeschwindigkeit zwischen den Reibpartnern sinkt. Um dies zu verhindern, werden Gleitschutzsysteme oder Gleitschutzregelsysteme verwendet, durch welche im Falle eines Bremsblockierens die Bremskraft an der betroffenen Achse reduziert wird, um wieder annähernd in den Bereich der Haftreibung bzw. eines optimalen Bremsschlupfes zu gelangen.

Diese durch die Gleitschutzregelung vorgenommene Reduzierung der Bremskräfte an bremsblockierenden Achsen führt dazu, dass die gewünschte Verzögerung des Schienenfahrzeugs bzw. Schienenfahrzeugzuges unter Umständen nicht erreicht wird bzw. es zu einer Bremswegverlängerung kommen kann.

Insbesondere bei Notbremseinrichtungen, bei welchen die Notbremse bisher über einen konstanten bzw. lediglich gleitschutzgeregelten und/oder lastkorrigierten Notbremsdruck gesteuert wird, ist eine Bremswegverlängerung aufgrund schwankender Reibungsverhältnisse unbedingt zu vermeiden.

Aufgabe

Der vorliegenden Erfindung liegt demgegenüber die Aufgabe zugrunde, eine Notbremseinrichtung sowie ein Verfahren zu ihrer Steuerung anzugeben, so dass sich sowohl bei einem Betriebs- wie auch bei einem Notbremsvorgang ein möglichst kurzer Bremsweg ergibt.

Diese Aufgabe wird erfindungs gemäß durch die Merkmale von Anspruch 1 und Anspruch 7 gelöst.

Offenbarung der Erfindung

Das Verfahren gemäß der Erfindung beinhaltet wenigstens die folgenden Schritte:

     a) Identifizieren von wenigstens einer während der Notbremsung unzulässig bremsschlupfenden Achse, bei welcher ein unzulässiger Bremsschlupf außerhalb eines vorgegebenen optimalen Bremsschlupfbereichs auftritt,

b) Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende Achse,

c) Anpassen der Reibungsbremskräfte an der wenigstens einen, nicht oder in zulässigem Maße bremsschlupfenden Achse derart, dass durch wenigstens teilweise Kompensation der aufgrund des unzulässigen Bremsschlupfes an der wenigstens einen Achse verlorenen Reibungsbremskraft durch diese Anpassung eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs gehalten werden kann.

Die Erfindung betrifft auch eine Notbremseinrichtung beinhaltend wenigstens folgendes:

a) Bremsaktuatoren zum Erzeugen von Bremsreibungskräften an den reibungsgebremsten Achsen während einer Notbremsung,

b) Identifikationsmittel zum Identifizieren von wenigstens einer während einer Notbremsung unzulässig bremsschlupfenden Achse, bei welcher ein Bremsschlupf außerhalb eines vorgegebenen optimalen Bremsschlupfbereichs auftritt,

c) Identifikationsmittel um Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende und reibungsgebremste Achse,

d) Sensormittel zur Ermittlung der Ist-Verzögerung des Schienenfahrzeugs oder des Schienenfahrzeugzuges während der Notbremsung,

e) ein elektronisches Steuergerät, welches den Bremsaktuator oder die Bremsaktuatoren an der wenigstens einen, nicht oder in zulässigem Maße bremsschlupfenden Achse während der Notbremsung derart ansteuert, dass durch wenigstens teilweise Kompensation der durch den unzulässigen Bremsschlupf an der wenigstens einen Achse verlorenen Reibungsbremskraft eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs gehalten werden kann.

Mit anderen Worten besteht der grundsätzliche Erfindungsgedanke darin, dass im Falle einer Notbremsung durch eine Bremskrafterhöhung an nicht oder in erlaubtem Maße bremsschlupfenden (bremsgleitenden) Achsen die an übermäßig bremsschlupfenden Achsen verlorenen Bremskräfte kompensiert werden, um eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs halten zu können.

Die bei einer Notbremsung insgesamt zur Verfügung stehenden Bremskräfte werden folglich abhängig von den an den betreffenden Achsen vorliegenden Bremsreibungsverhältnissen auf die Achsen verteilt, so dass hieraus auch hohe Soll-Verzögerungen des Schienenfahrzeugs oder des Schienenfahrzeugzuges erzielt werden können.

Der Erfindungsgedanke besteht mit anderen Worten darin, während einer Notbremsung die Bremskräfte innerhalb des Zuges so anzupassen oder zu verteilen, dass die durch Reibungseinflüsse verlorenen Reibungskräfte, beispielsweise durch Gleitschutzauslösung an einzelnen Achsen kompensiert werden und die Abweichung der Ist-Verzögerung des Zuges von der gewünschten Soll-Verzögerung innerhalb eines tolerierbaren Bereichs gehalten wird, unabhängig davon, an welchen Achsen des Zuges bzw. des Fahrzeugs die dazu notwendige Bremskraft erzeugt wird.

Diese Kompensation kann sowohl lokal innerhalb eines Drehgestells, eines Wagens als auch zugweit, d.h. innerhalb des Zuges erfolgen. Bevorzugt wird die Kompensation innerhalb eines ganzen Zug erfolgen.

Im Gegensatz zum Stand der Technik, bei welchem Regelungssysteme wie beispielsweise eine Gleitschutzregelung nur jeweils im Rahmen einer einzelnen Achse, eines einzelnen Drehgestells oder eines einzelnen Schienenfahrzeugs realisiert ist und ein diesbezüglicher Datenaustausch unter einzelnen Achsen, Drehgestellen bzw. Schienenfahrzeugen eines Schienenfahrzeugzuges lediglich die Raddrehzahlen zur Referenzgeschwindigkeitsbildung betrifft, wird der Datenaustausch oder Datenfluss im Rahmen der Erfindung bevorzugt dahingehend erweitert, dass nun Daten über aufgrund ungünstiger Bremsreibungsverhältnisse bremsschlupfender Achsen sowie über nicht bremsschlupfende oder noch vom Bremsschlupf entfernt abgebremste und damit zur Kompensation zur Verfügung stehende Achsen auch innerhalb eines ganzen Schienenfahrzeugzuges, d.h. zugweit kommuniziert werden.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform erfolgt die Kompensation der an der wenigstens einen unzulässig bremsschlupfenden Achse verlorenen Reibungsbremskraft während der Notbremsung unmittelbar nach dem Schritt b) oder noch während der Notbremsung, aber um eine vorbestimmte Zeitdauer nach dem Schritt b) von Anspruch 1.

Gemäß einer Weiterbildung wird ein Eingriff der Gleitschutzregelung an einer Achse als Kriterium dafür herangezogen, dass an dieser Achse während der Notbremsung ein unzulässiger Bremsschlupf auftritt.

Besonders bevorzugt wird die Notbremseinrichtung druckmittelbetätigt und für wenigstens eine Achse abhängig von der Abweichung der Ist-Verzögerung von der Soll-Verzögerung ein elektronisch verzögerungsgeregelter Notbremsdruck sowie unabhängig und parallel hierzu ein weiterer Notbremsdruck erzeugt. Dabei wird der weitere Notbremsdruck beispielsweise lastkorrigiert, d. h. an die gerade vorliegende Last angepasst.

Ganz besonders bevorzugt wird von dem verzögerungsgeregelten Notbremsdruck oder von einem diesen repräsentierenden verzögerungsgeregelten Vorsteuerdruck und dem weiteren Notbremsdruck oder einem diesen repräsentierenden weiteren Vorsteuerdruck der jeweils größere Notbremsdruck bzw. der jeweils größere Vorsteuerdruck zur Erzeugung der Notbremskraft an der wenigstens einen Achse herangezogen. Wesentlich dabei ist, dass die Notbremsung von der elektronischen Regelung unbeeinflusst bleibt und kein verzögerungsgeregelter Notbremsdruck bzw. kein verzögerungsgeregelter Vorsteuerdruck zur Erzeugung der Notbremskräfte herangezogen wird, der kleiner als der parallel dazu erzeugte weitere Notbremsdruck bzw. weitere Vorsteuerdruck ist, um die Sicherheitsebene der Notbremse nicht anzutasten. Deshalb wird die unabhängige und parallele Erzeugung des weiteren Notbremsdrucks bzw. des weiteren Vorsteuerdrucks gemäß des Stands der Technik bevorzugt beibehalten. Lediglich parallel hierzu wird über die Verzögerungsregelung ein verzögerungsgeregelter Notbremsdruck bzw. ein verzögerungsgeregelter Vorsteuerdruck gebildet, welcher beispielsweise durch einen Korrekturfaktor gegenüber dem konventionell erzeugten Notbremsdruck bzw. Vorsteuerdruck erhöht wird und zur Kompensation der aufgrund ungünstiger Reibungsverhältnisse zu niedrigen und auf dem konventionell Notbremsdruck bzw. Vorstreuerdruck basierenden Notbremskräfte dient. Beide Notbremsdrücke bzw. Vorsteuerdrücke werden pneumatisch verglichen, so dass immer der größere Notbremsdruck bzw. Vorsteuerdruck weiter gesteuert wird. Wenn daher die elektronische Regelung in einem oder mehreren Wagen ausfällt, so entfällt daher lediglich der verzögerungsgeregelte Notbremsdruck bzw. der verzögerungsgeregelte Vorsteuerdruck, während dann in jedem Fall der konventionelle Notbremsdruck bzw. Vorsteuerdruck weiter gesteuert wird.

Gemäß einer bevorzugten Ausführungsform der Notbremseinrichtung ist diese daher druckmittelbetätigt und umfasst für wenigstens eine Achse eine vom elektronischen Steuergerät gesteuerte erste Ventileinrichtung, welche für die wenigstens eine Achse abhängig von der Abweichung der Ist-Verzögerung von der Soll-Verzögerung den verzögerungsgeregelten Notbremsdruck bzw. den verzögerungsgeregelten Vorsteuerdruck erzeugt.

Dabei beinhaltet die erste Ventileinrichtung beispielsweise wenigstens ein mit einem Druckmittelvorrat in Verbindung stehendes Belüftungsventil sowie ein mit einer Drucksenke in Verbindung stehendes Entlüftungsventil, um den verzögerungsgeregelten Notbremsdruck bzw. den verzögerungsgeregelten Vorsteuerdruck zu erzeugen. Weiterhin empfängt dann das elektronische Steuergerät ein die Ist-Verzögerung repräsentierendes Verzögerungssignal, welches beispielsweise auf der Basis von Raddrehzahlsignalen erzeugt wird, um eine Abweichung von einem die Soll-Verzögerung repräsentierenden Signal durch eine entsprechende Ansteuerung der ersten Ventileinrichtung ausregeln zu können.

Darüber hinaus umfasst die Notbremseinrichtung weiterhin eine vom elektronischen Steuergerät gesteuerte zweite Ventileinrichtung, welche für die wenigstens eine Achse unabhängig und parallel zu dem verzögerungsgeregelten Notbremsdruck bzw. zu dem verzögerungsgeregelten Vorsteuerdruck den weiteren Notbremsdruck bzw. den weiteren Vorsteuerdruck zu erzeugen.

Hierbei sind Auswahlmittel vorgesehen, welche während einer Notbremsung von dem geregelten Notbremsdruck bzw. dem verzögerungsgeregelten Vorsteuerdruck und dem weiteren Notbremsdruck bzw. dem weiteren Vorsteuerdruck den größeren Druck zur Erzeugung der Reibungsbremskraft im Notbremsfall weitersteuert.

Die Auswahlmittel können gemäß einer bevorzugten Ausführungsform wenigstens ein Doppelrückschlagventil beinhalten, von welchem ein Druckeingang mit dem verzögerungsgeregelten Notbremsdruck oder mit dem verzögerungsgeregelten Vorsteuerdruck und dessen weiterer Druckeingang mit dem weiteren Notbremsdruck oder dem weiteren Vorsteuerdruck beaufschlagt ist.

Alternativ können die Auswahlmittel wenigstens ein einen lastkorrigierten Bremsdruck erzeugendes Relaisventil mit zwei Steuereingängen beinhalten, wobei an dem einen Steuereingang der geregelte Notbremsdruck als erster Steuerdruck und an dem anderen Steuereingang der weitere Notbremsdruck als zweiter Steuerdruck ansteht und das Relaisventil ausgebildet ist, um abhängig von dem jeweils größeren Steuerdruck einen lastkorrigierten Bremsdruck für die wenigstens eine Achse zu erzeugen.

Genaueres geht aus der folgenden Beschreibung eines Ausführungsbeispiels hervor.

Zeichnung

Ausführungsbeispiele der Erfindung sind in der Zeichnung dargestellt und in der nachfolgenden Beschreibung näher erläutert. In der Zeichnung zeigt

Fig.1     einen schematischen Aufbau einer Notbremseinrichtung gemäß einer bevorzugten Ausführungsform der Erfindung;

Fig.2    eine konkrete Ausführung der Notbremseinrichtung von Fig.1;

Fig.3    eine weitere Ausführung der Notbremseinrichtung von Fig.1.

Beschreibung der Ausführungsbeispiele

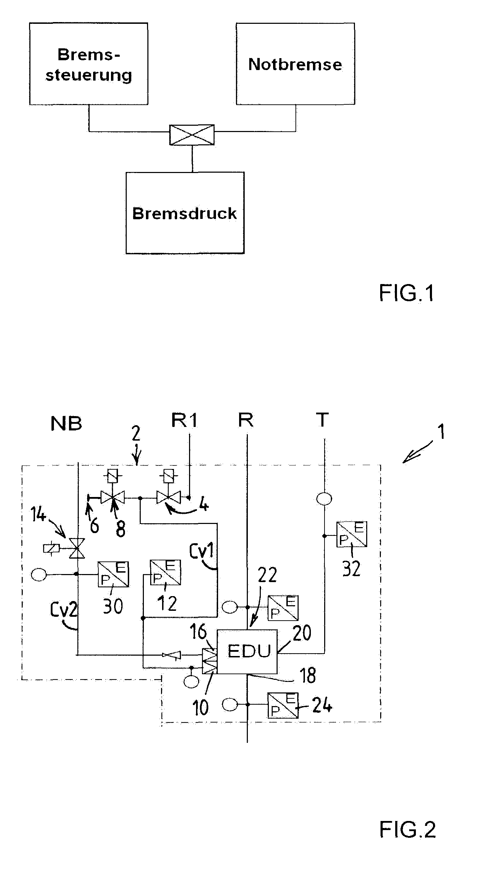

Die in Fig.1 stark schematisch gezeigte bevorzugte Ausführungsform einer Notbremseinrichtung 1 ist Bestandteil einer gleitschutzgeregelten Reibungsbremsanlage eines aus mehreren einzelnen Schienenfahrzeugen bestehenden Schienenfahrzeugzuges, wobei die Bremsanlage eine Anzahl von gebremsten und gleitschutzgeregelten Achsen (Radsätze) aufweist. Bei der Bremsanlage kann es sich beispielsweise um eine direkt wirkende oder um eine indirekt wirkende elektropneumatische Reibungsbremse handeln, wobei ein Bremsdruck C auf Bremszylinder wirkt, welche bevorzugt Bremsbeläge in Reibkontakt mit mit den Achsen drehenden Bremsscheiben bringen. Die Achsen sind Drehgestellen zugeordnet, vorzugsweise je Drehgestell zwei Achsen und je Schienenfahrzeug zwei Drehgestelle. Im Betriebsbremsfall wie auch im Notbremsfall wird daher die elektropneumatische Reibungsbremse betätigt.

Eine zusätzliche Gleitschutzeinrichtung verhindert beim Betriebsbremsen wie auch bevorzugt beim Notbremsen das Blockieren der Radsätze beim Bremsen, wodurch Flachstellen an den Rädern vermieden werden können. Bevorzugt ist der Gleitschutz mikroprozessorgesteuert, wobei die Drehzahlen der Radsätze der einzelnen Schienenfahrzeuge durch Raddrehzahlsensoren erfasst werden. Hieraus berechnet der Mikroprozessor in einer Auswertelogik eine Ansteuerung von Gleitschutzventilen. Durch die Gleitschutzventile wird der Bremszylinderdruck C je nach Bedarf vermindert, gehalten oder erhöht.

Die elektropneumatische Reibungsbremse des Schienenfahrzeugzuges wird von einem oder mehreren Bremssteuergeräten gesteuert. Raddrehzahlsensoren melden die Raddrehgeschwindigkeiten der Achsen an das Bremssteuergerät, in welches bevorzugt auch die Auswertelogik der Gleitschutzeinrichtung integriert ist.

Vor diesem Hintergrund werden gemäß eines hier vorgestellten Verfahrens, welches bevorzugt mittels in einem oder in mehreren Bremssteuergeräten gespeicherten Routinen durchgeführt wird, wenigstens die folgenden Schritte durchgeführt:

a) Identifizieren von wenigstens einer während der Notbremsung unzulässig bremsschlupfenden Achse, bei welcher ein unzulässiger Bremsschlupf außerhalb eines vorgegebenen optimalen Bremsschlupfbereichs auftritt,
b) Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende Achse,
c) Anpassen der Reibungsbremskräfte an der wenigstens einen, nicht oder in zulässigem Maße bremsschlupfenden Achse derart, dass durch wenigstens teilweise Kompensation der aufgrund des unzulässigen Bremsschlupfes an der wenigstens einen Achse verlorenen Reibungsbremskraft durch diese Anpassung eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs gehalten werden kann.

Mit anderen Worten werden im Falle einer Notbremsung durch eine Bremskrafterhöhung an nicht oder in erlaubtem Maße bremsschlupfenden (bremsgleitenden) Achsen die an übermäßig bremsschlupfenden Achsen verlorenen Bremskräfte kompensiert, um eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs halten zu können. Die Soll-Verzögerung während einer Notbremsung ist von mehreren Faktoren abhängig, beispielsweise von der momentanen Last und beispielsweise kennfeldabhängig gespeichert, wobei der jeweilige Wert im Notbremsfall abgerufen wird.

Dabei erfolgt der für die beschriebene Kompensation erforderliche Datenaustausch oder Datenfluss zwischen den einzelnen Wagen des Zuges bevorzugt dahingehend, dass nun Daten aufgrund ungünstiger Bremsreibungsverhältnisse bremsschlupfender Achsen sowie über nicht bremsschlupfende oder noch vom Bremsschlupf entfernt abgebremste und damit zur Kompensation zur Verfügung stehende Achsen innerhalb des gesamten Schienenfahrzeugzuges, d.h. zugweit kommuniziert werden, insbesondere zwischen bevorzugt in jedem Wagen bzw. in jedem Drehgestell vorhandenen lokalen Bremssteuergeräten. Alternativ oder zusätzlich kann die beschriebene Kompensation auch wagenweise oder auch nur drehgestellweise, d.h. zwischen den Reibungsbremsen einzelner Achsen erfolgen.

Besonders bevorzugt wird von der Notbremseinrichtung für wenigstens eine Achse abhängig von der Abweichung der Ist-Verzögerung von der Soll-Verzögerung des Schienenfahrzeugzuges ein verzögerungsgeregelter Notbremsdruck bzw. ein diesen repräsentierender Vorsteuerdruck sowie unabhängig und parallel hierzu ein weiterer Notbremsdruck bzw. ein diesen repräsentierender weiterer Vorsteuerdruck erzeugt. Dabei wird der weitere Notbremsdruck bzw. der weitere Vorsteuerdruck beispielsweise lastkorrigiert, d. h. an die gerade vorliegende Last angepasst. Dieser weitere Notbremsdruck bzw. dieser weitere Vorsteuerdruck entspricht dem Stand der Technik, d.h. er ist in der Regel lastkorrigiert und/oder gleitschutzgeregelt.

Der elektronisch verzögerungsgeregelte Notbremsdruck bzw. ein diesen repräsentierender verzögerungsgeregelter Vorsteuerdruck wird dagegen von einer elektronischen Bremssteuerung erzeugt, insbesondere von einem elektronischen "Bremssteuergerät", wie in Fig.1 durch den linken Zweig veranschaulicht ist. Parallel hierzu wird im Notbremsfall der weitere, beispielsweise lastkorrigierte Notbremsdruck bzw. ein diesen repräsentierender Vorsteuerdruck wie beim Stand der Technik erzeugt, d.h. es wird der Reibungsbremse mittels eines im Notbremsfall durchgeschalteten Notbremsventils Druckmittel aus einem Druckmittelvorrat zugeführt. Dieser in Fig.1 rechte Zweig wird durch den Begriff "Notbremse" veranschaulicht.

Sodann wird von dem verzögerungsgeregelten Notbremsdruck bzw. von dem diesen repräsentierenden verzögerungsgeregelten Vorsteuerdruck und dem weiteren Notbremsdruck bzw. von dem diesen repräsentierenden verzögerungsgeregelten Vorsteuerdruck der jeweils größere Notbremsdruck bzw. Vorsteuerdruck, in Fig.1 allgemein als "Bremsdruck" bezeichnet, zur Erzeugung der Reibungsbremskraft an der wenigstens einen Achse herangezogen.

Wesentlich dabei ist, dass kein verzögerungsgeregelter Notbremsdruck bzw. kein diesen repräsentierender verzögerungsgeregelter Vorsteuerdruck zur Erzeugung der Notbremskräfte herangezogen wird, der kleiner als der parallel erzeugte weitere Notbremsdruck bzw. als der diesen repräsentierende Vorsteuerdruck ist, um die Sicherheitsebene der Notbremse nicht anzutasten. Deshalb wird die unabhängige und parallele Erzeugung des weiteren Notbremsdrucks bzw. eines diesen repräsentierenden Vorsteuerdrucks gemäß des Stands der Technik beibehalten. Lediglich parallel hierzu wird über die Verzögerungsregelung ein geregelter Notbremsdruck bzw. ein diesen repräsentierender verzögerungsgeregelter Vorsteuerdruck gebildet, welcher jedoch dann beispielsweise durch einen Korrekturfaktor gegenüber dem konventionell erzeugten Notbremsdruck erhöht wird, der zur Kompensation der aufgrund ungünstiger Reibungsverhältnisse zu niedrigen und auf dem konventionell Notbremsdruck basierenden Notbremskräfte dient. Beide parallel und unabhängig voneinander erzeugten Notbremsdrücke bzw. Vorsteuerdrücke werden pneumatisch verglichen, so dass immer auf der Basis des größeren Notbremsdrucks bzw. Vorsteuerdrucks (in Fig.1 "Bremsdruck") die Reibungsbremskräfte durch die Bremsaktuatoren erzeugt werden. Wenn daher die elektronische Regelung od. Bremssteuerung in einem oder mehreren Wagen ausfällt, so fällt daher lediglich der verzögerungsgeregelte Notbremsdruck bzw. Vorsteuerdruck aus, während in jedem Fall der (konventionelle) weitere Notbremsdruck bzw. weitere Vorsteuerdruck weiterhin für die Bremsaktuatoren zur Verfügung steht, um die Reibungsbremskräfte zu erzeugen.

Als Kriterium für das Vorliegen eines unzulässigen Bremsschlupfes während einer Notbremsung an einer Achse oder an einem Drehgestell wird beispielsweise ein Eingriff der Gleitschutzregelung an dieser Achse oder an diesem Drehgestell herangezogen, d. h. wenn die Gleitschutzregelung versucht, den vorliegenden Bremsschlupf an einen optimalen Bremsschlupf bzw. einen optimalen Bremsschlupfbereich anzupassen. Analog wird als Kriterium für das Vorliegen eines zulässigen Bremsschlupfes während einer Notbremsung an einer Achse oder an einem Drehgestell bevorzugt ein Nicht-Eingreifen der Gleitschutzeinrichtung herangezogen, so dass der Bremsschlupf an der betreffenden Achse oder an dem betreffenden Drehgestell bereits zulässig bzw. optimal ist.

Gemäß einer besonders zu bevorzugenden Ausführungsform erfolgt die Kompensation der an der wenigstens einen unzulässig bremsschlupfenden Achse verlorenen Reibungsbremskraft während der Notbremsung unmittelbar nach dem Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende Achse oder noch während der Notbremsung, aber um eine vorbestimmte Zeitdauer nach diesem Schritt.

Fig.2 zeigt eine im Gegensatz zu Fig.1 eine konkretisierte Ausführungsform einer Notbremseinrichtung 1, welche nach dem oben beschriebenen Verfahren gesteuert wird. Die Notbremseinrichtung 1 ist beispielsweise für die Reibungsbremsen beider Achsen eines Drehgestells vorgesehen, d.h. jeder der beiden Achsen ist eine Reibungsbremse zugeordnet, wobei die Notbremseinrichtung 1 im Notbremsfall für beide Reibungsbremsen einen Notbremsdruck C in gleicher Höhe erzeugt. Alternativ hierzu ist es auch denkbar, für jede Achse des Drehgestells einen individuellen Notbremsdruck C zu erzeugen.

Die Notbremseinrichtung 1 von Fig.1 umfasst eine von einem hier nicht explizit gezeigten elektronischen Bremssteuergerät gesteuerte erste Ventileinrichtung als e/p-Druckregler 2, welche für die Reibungsbremsen des Drehgestells abhängig von der Abweichung der Ist-Verzögerung von der Soll-Verzögerung während der Notbremsung einen verzögerungsgeregelten Vorsteuerdruck $Cv_1$ für eine Relaisventileinrichtung EDU erzeugt. Dabei beinhaltet der e/p-Druckregler 2 beispielsweise wenigstens ein mit einem Druckmittelvorrat R1 in Verbindung stehendes elektromagnetisches Belüftungsventil 4 sowie ein mit einer Drucksenke 6 in Verbindung stehendes elektromagnetisches Entlüftungsventil 8, um den verzögerungsgeregelten Vorsteuerdruck $Cv_1$ zu erzeugen und ihn an einen ersten pneumatischen Steuereingang 10 der Relaisventileinrichtung EDU weiter zu steuern. Dieser verzögerungsgeregelte Vorsteuerdruck $Cv_1$ wird von einem Drucksensor 12 gemessen.

Weiterhin empfängt das elektronische Bremssteuergerät ein die Ist-Verzögerung repräsentierendes Verzögerungssignal, welches beispielsweise auf der Basis von Raddrehzahlsignalen erzeugt wird, um eine Abweichung von einem die Soll-Verzögerung repräsentierenden Signal durch eine entsprechende Ansteuerung der ersten Ventileinrichtung 2 ausregeln zu können, welche daraufhin den ersten Vorsteuerdruck $Cv_1$ erzeugt. Abhängig von der Regelabweichung verbindet daher das Entlüftungsventil 8 den ersten pneumatischen Steuereingang 10 der Relaisventileinrichtung EDU mit der Drucksenke 6 oder das Belüftungsventil 4 diesen ersten pneumatischen Steuereingang 10 mit dem Druckluftvorrat R1.

Darüber hinaus umfasst die Notbremseinrichtung 1 von Fig.1 eine beispielsweise von einer Notbremsschleife direkt gesteuerte zweite Ventileinrichtung 14, welche für das Drehgestell unabhängig und parallel zu dem verzögerungsgeregelten Vorsteuerdruck $Cv_1$ den weiteren Vorsteuerdruck $Cv_2$ erzeugt. Diese zweite Ventileinrichtung 14 besteht beispielsweise in einem fest verdrahteten elektromagnetischen Notbremsventil, welches im Notbremsfall einen von einem beispielsweise separaten Druckmittelvorrat NB (Notbremse) abgeleiteten weiteren Vorsteuerdruck $Cv_2$ an einen zweiten pneumatischen Steuereingang 16 der Relaisventileinrichtung EDU weitersteuert. Dieser weitere Vorsteuerdruck $Cv_2$ wird von einem Drucksensor 30 gemessen.

Das Notbremsventil 14, das Belüftungsventil 4 sowie das Entlüftungsventil 8 sind bevorzugt als elektrisch gesteuerte 2/2-Wege-Magnetventile ausgeführt, wobei das Notbremsventil 14 von einer elektrischen Notbremsschleife des Schienenfahrzeugzuges und das Belüftungsventil 4 sowie das Entlüftungsventil 8 vom Bremssteuergerät elektrisch gesteuert werden. Wesentlich dabei ist, dass die beiden Vorsteuerdrücke $Cv_1$ und $Cv_2$ zwar auf eine gemeinsame Notbremsanforderung hin, beispielsweise mittels Trennen der zugweiten Notbremsschleife, aber dann unabhängig voneinander gebildet werden.

Die Relaisventileinrichtung EDU beinhaltet ein hier nicht explizit gezeigtes Doppelsitzventil mit einem Einlassventil und einem Auslassventil und ist bevorzugt mit einer Lastkorrektur versehen, d.h. abhängig von der jeweiligen Wagenlast wird der an einem Arbeitsausgang 18 der Relaisventileinrichtung anstehende Bremsdruck C korrigiert. Hierzu weist die Relaisventileinrichtung EDU einen durch einen Lastdruck T belasteten Steuereingang 20 auf. Der Lastdruck T wird dabei von einem Drucksensor 32 gemessen. Nicht zuletzt besitzt die Relaisventileinrichtung EDU auch einen Vorratsanschluss 22 zur Verbindung mit einem Druckluftvorrat R.

Weiterhin ist die Relaisventileinrichtung EDU ausgebildet, um abhängig von dem jeweils größeren Vorsteuerdruck, nämlich von dem von der ersten Ventileinrichtung 2 erzeugten verzögerungsgeregelten und am ersten pneumatischen Steuereingang 10 anstehenden Vorsteuerdruck $Cv_1$ und von dem von der zweiten Ventileinrichtung 14 erzeugten und am zweiten pneumatischen Steuereingang 16 anstehenden weiteren Vorsteuerdruck $Cv_2$ den (Not-)Bremsdruck C im Notbremsfall zu erzeugen, welcher von einem Drucksensor 24 gemessen wird. Eine solche Relaisventileinrichtung EDU ist beispielsweise aus der DE 10 2004 024 462 A1 bekannt.

Bei der Ausführungsform von Fig.2 wird erfolgt die Auswahl des größeren Vorsteuerdrucks Cv1 oder Cv2 zur Bildung des Bremsdrucks C in der Relaisventileinrichtung EDU, welche hierzu zwei pneumatische Steuereingänge 10, 16 aufweist.

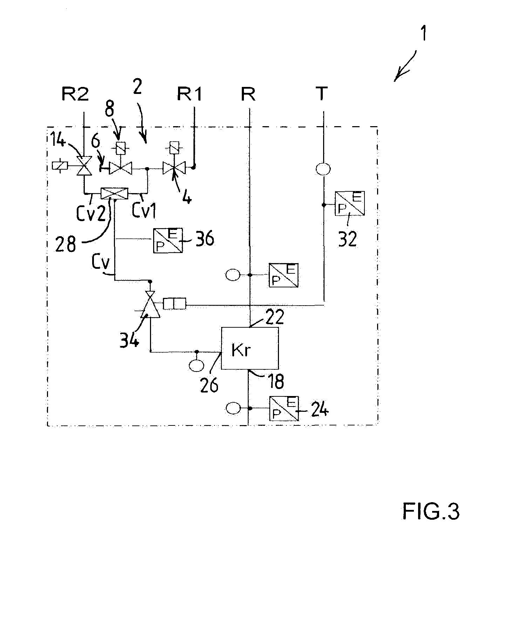

Bei der Ausführungsform gemäß Fig.3 weist die Relaisventileinrichtung Kr im Unterschied zur Ausführungsform von Fig.2 lediglich einen einzigen pneumatischen Steuereingang für einen einzigen Vorsteuerdruck Cv auf und ist daher nicht ausgebildet, um abhängig von mehreren Vorsteuerdrücken einen Bremsdruck C abhängig von einem der Vorsteuerdrücke zu erzeugen.

In diesem Fall ist beispielsweise ein der Relaisventileinrichtung Kr vorgeordnetes oder vorgeschaltetes Doppelrückschlagventil oder Wechselventil 28 vorgesehen, von welchem ein Druckeingang mit dem verzögerungsgeregelten Vorsteuerdruck $Cv_1$ und dessen weiterer Druckeingang mit dem weiteren Vorsteuerdruck $Cv_2$ beaufschlagt ist. Während einer Notbremsung wird dann von dem von der ersten Ventileinrichtung 2 erzeugten verzögerungsgeregelten Vorsteuerdruck $Cv_1$ und dem von der zweiten Ventileinrichtung 14 erzeugten Vorsteuerdruck $Cv_2$ der jeweils größere, noch nicht lastkorrigierte Vorsteuerdruck $Cv_1$ oder $Cv_2$ durch das Doppelrückschlagventil oder Wechselventil 28 als Vorsteuerdruck Cv an ein Druckbegrenzungsventil 34 weiter gesteuert, aber zuvor von einem Drucksensor 36 gemessen. Die zweite Ventileinrichtung 14 beinhaltet dabei wiederum ein übliches Notbremsventil, welches vorzugsweise an einen separaten Druckluftvorrat R2 für die Notbremse angeschlossen ist.

Das Druckbegrenzungsventil 34 begrenzt den vom Doppelrückschlagventil 28 weiter gesteuerten Vorsteuerdruck Cv lastabhängig, indem es mit dem Lastdruck T beaufschlagt wird. Von diesem wird der dann lastkorrigierte Vorsteuerdruck Cv in den pneumatischen Steuereingang 26 der Relaisventileinrichtung Kr eingesteuert, um im Notbremsfall abhängig vom Vorsteuerdruck Cv einen entsprechenden Bremsdruck C für das Drehgestell zu erzeugen.

Bezugszeichenliste

| 1 | Notbremseinrichtung |
|---|---|
| 2 | erste Ventileinrichtung |
| 4 | Belüftungsventil |
| 6 | Drucksenke |
| 8 | Entlüftungsventil |
| 10 | erster Steuereingang |
| 12 | Drucksensor |
| 14 | zweite Ventileinrichtung |
| 16 | zweiter Steuereingang |
| 18 | Arbeitsausgang |
| 20 | Steuereingang |
| 22 | Vorratsanschluss |
| 24 | Drucksensor |

26 Steuereingang
28 Doppelrückschlagventil
30 Drucksensor
32 Drucksensor
34 Druckbegrenzungsventil

**Patentansprüche**

1. Verfahren zur Steuerung einer Notbremseinrichtung (1) eines Schienenfahrzeugs oder eines aus mehreren Schienenfahrzeugen bestehenden Schienenfahrzeugzugs, welches oder welcher eine Anzahl von durch Reibungsbremsen gebremsten Achsen aufweist, wobei eine Notbremsung durch eine Notbremsanforderung gestartet wird, beinhaltend wenigstens die folgenden Schritte:

   a) Identifizieren von wenigstens einer während der Notbremsung unzulässig bremsschlupfenden Achse, bei welcher ein unzulässiger Bremsschlupf außerhalb eines vorgegebenen optimalen Bremsschlupfbereichs auftritt,
   b) Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende Achse,
   c) Anpassen der Reibungsbremskräfte an der wenigstens einen, nicht oder in zulässigem Maße bremsschlupfenden Achse derart, dass durch wenigstens teilweise Kompensation der aufgrund des unzulässigen Bremsschlupfes an der wenigstens einen Achse verlorenen Reibungsbremskraft durch diese Anpassung eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs gehalten werden kann.

2. Verfahren nach Anspruch 1, **dadurch gekennzeichnet, dass** die Kompensation der an der wenigstens einen unzulässig bremsschlupfenden Achse verlorenen Reibungsbremskraft während der Notbremsung unmittelbar nach dem Schritt b) oder noch während der Notbremsung, aber um eine vorbestimmte Zeitdauer nach dem Schritt b) erfolgt.

3. Verfahren nach einem der vorhergehenden Ansprüche, **dadurch gekennzeichnet, dass** ein Eingriff der Gleitschutzregelung an einer Achse als Kriterium dafür herangezogen wird, dass an dieser Achse während der Notbremsung ein unzulässiger Bremsschlupf auftritt.

4. Verfahren nach einem der vorhergehenden Ansprüche, **dadurch gekennzeichnet, dass** die Notbremseinrichtung (1) druckmittelbetätigt wird und für wenigstens eine Achse abhängig von der Abweichung der Ist-Verzögerung von der Soll-Verzögerung ein verzögerungsgeregelter Notbremsdruck oder ein verzögerungsgeregelter Vorsteuerdruck ($Cv_1$) sowie unabhängig und parallel hierzu ein weiterer Notbremsdruck oder ein weiterer Vorsteuerdruck ($Cv_2$) erzeugt wird.

5. Verfahren nach einem der vorhergehenden Ansprüche, **dadurch gekennzeichnet, dass** der weitere Notbremsdruck oder der weitere Vorsteuerdruck ($Cv_2$) lastkorrigiert wird.

6. Verfahren nach Anspruch 4 oder 5, **dadurch gekennzeichnet, dass** von dem verzögerungsgeregelten Notbremsdruck oder dem verzögerungsgeregelten Vorsteuerdruck ($Cv_1$) und dem weiteren Notbremsdruck oder dem weiteren Vorsteuerdruck ($Cv_2$) der jeweils größere Druck zur Erzeugung der Reibungsbremskraft an der wenigstens einen Achse herangezogen wird.

7. Notbremseinrichtung (1) eines Schienenfahrzeugs oder eines aus mehreren Schienenfahrzeugen bestehenden Schienenfahrzeugzugs, welches oder welcher eine Anzahl von reibungsgebremsten Achsen aufweist, beinhaltend wenigstens folgendes:

   a) Bremsaktuatoren zum Erzeugen von Reibungsbremskräften an den reibungsgebremsten Achsen während einer Notbremsung,
   b) Identifikationsmittel zum Identifizieren von wenigstens einer während einer Notbremsung unzulässig bremsschlupfenden Achse, bei welcher ein Bremsschlupf außerhalb eines vorgegebenen optimalen Bremsschlupfbereichs auftritt,
   c) Identifikationsmittel um Identifizieren wenigstens einer während der Notbremsung nicht oder in zulässigem Maße bremsschlupfenden Achse, durch welche eine größere Reibungsbremskraft übertragbar ist als durch die wenigstens eine unzulässig bremsschlupfende und reibungsgebremste Achse,
   d) Sensormittel zur Ermittlung der Ist-Verzögerung des Schienenfahrzeugs oder des Schienenfahrzeugzuges während der Notbremsung,
   e) ein elektronisches Steuergerät, welches den Bremsaktuator oder die Bremsaktuatoren an der wenigstens einen, nicht oder in zulässigem Maße bremsschlupfenden Achse während der Notbremsung derart ansteuert, dass durch wenigstens teilweise Kompensation der durch den unzulässigen Bremsschlupf an der wenigstens einen Achse verlorenen Reibungsbremskraft eine Abweichung der Ist-Verzögerung des Schienenfahrzeugs oder des Schienenfahrzeugzuges von einer durch die Notbremsanforderung vorgegebenen Soll-Verzögerung innerhalb eines tolerierbaren Bereichs gehalten werden kann.

8. Notbremseinrichtung nach Anspruch 7, **dadurch gekennzeichnet, dass** sie eine Gleitschutzregeleinrichtung umfasst und dass ein Eingriff der Gleitschutzregelung an einer reibungsgebremsten Achse während einer Notbremsung als Kriterium dafür herangezogen wird, ob an dieser reibungsgebremsten Achse ein Bremsschlupf außerhalb des vorgegebenen optimalen Bremsschlupfbereichs auftritt.

9. Notbremseinrichtung nach einem der Ansprüche 7 oder 8, **dadurch gekennzeichnet, dass** sie druckmittelbetätigt ist und für wenigstens eine Achse eine vom elektronischen Steuergerät gesteuerte erste Ventileinrichtung (2) umfasst, welche für die wenigstens eine Achse abhängig von der Abweichung der Ist-Verzögerung von der Soll-Verzögerung einen verzögerungsgeregelten Notbremsdruck oder einen diesen repräsentierenden verzögerungsgeregelten Vorsteuerdruck ($Cv_1$) erzeugt.

10. Notbremseinrichtung nach Anspruch 9, **dadurch gekennzeichnet, dass** die erste Ventileinrichtung (2) wenigstens ein mit einem Druckmittelvorrat (R1) in Verbindung stehendes Belüftungsventil (4) sowie ein mit einer Drucksenke (6) in Verbindung stehendes Entlüftungsventil (8) beinhaltet.

11. Notbremseinrichtung nach Anspruch 9 oder 10, **dadurch gekennzeichnet, dass** sie weiterhin eine vom elektronischen Steuergerät gesteuerte zweite Ventileinrichtung (14) umfasst, welche für die wenigstens eine Achse unabhängig und parallel zu dem verzögerungsgeregelten Notbremsdruck oder zu dem diesen repräsentierenden verzögerungsgeregelten Vorsteuerdruck ($Cv_1$) einen weiteren Notbremsdruck oder einen diesen repräsentierenden weiteren Vorsteuerdruck ($Cv_2$) erzeugt.

12. Notbremseinrichtung nach Anspruch 9 oder 10 und 11, **dadurch gekennzeichnet, dass** Auswahlmittel (EDU; 28) vorgesehen sind, welche während einer Notbremsung von dem verzögerungsgeregelten Notbremsdruck oder von dem diesen repräsentierenden verzögerungsgeregelten Vorsteuerdruck ($Cv_1$) und dem weiteren Notbremsdruck oder dem diesen repräsentierenden Vorsteuerdruck ($Cv_2$) den größeren Notbremsdruck oder den größeren Vorsteuerdruck ($Cv_1$, $Cv_2$) weitersteuert.

13. Notbremseinrichtung nach Anspruch 12, **dadurch gekennzeichnet, dass** die Auswahlmittel wenigstens ein Doppelrückschlagventil (28) beinhalten, von welchem ein Druckeingang mit dem verzögerungsgeregelten Notbremsdruck oder mit dem verzögerungsgeregelten Vorsteuerdruck ($Cv_1$) und dessen weiterer Druckeingang mit dem weiteren Notbremsdruck oder dem weiteren Vorsteuerdruck ($Cv_2$) beaufschlagt ist.

14. Notbremseinrichtung nach Anspruch 12, **dadurch gekennzeichnet, dass** die Auswahlmittel wenigstens eine Relaisventileinrichtung (EDU) mit zwei pneumatischen Steuereingängen beinhalten, wobei an dem einen pneumatischen Steuereingang (10) der verzögerungsgeregelte Vorsteuerdruck ($Cv_1$) als erster Steuerdruck und an dem anderen pneumatischen Steuereingang (16) der weitere Vorsteuerdruck ($Cv_2$) als zweiter Steuerdruck ansteht und die Relaisventileinrichtung ausgebildet ist, um abhängig von dem jeweils größeren Steuerdruck ($Cv_1$, $Cv_2$) einen Notbremsdruck für die wenigstens eine Achse zu erzeugen.

**Claims**

1. A method for controlling an emergency brake device (1) of a rail vehicle or of a rail vehicle train which is composed of a plurality of rail vehicles, which rail vehicle or rail vehicle train has a number of axles which are braked by friction brakes, wherein emergency braking is started by an emergency braking request, comprising at least the following steps:

   a) identifying at least one axle which has inadmissible brake slip during the emergency braking and at which inadmissible brake slip occurs outside a predefined optimum brake slip range,
   b) identifying at least one axle which has no, or admissible, brake slip during the emergency braking and by which a larger friction braking force can be transmitted than by the at least one axle with inadmissible brake slip,
   c) adapting the friction braking forces at the at least one axle which has no, or admissible, brake slip such that by at least partially compensating the friction braking force which is lost at the at least one axle owing to the inadmissible brake slip, a deviation of the actual deceleration of the rail vehicle or of the rail vehicle train from a setpoint deceleration predefined by the emergency braking request can be kept within a tolerable range by means of this adaptation.

2. The method as claimed in claim 1, **characterized in that** the compensation of the friction braking force lost at the at least one axle with inadmissible brake slip during the emergency braking takes place directly after step b) or still during the emergency braking but after step b) by a predetermined time period.

3. The method as claimed in one of the preceding claims, **characterized in that** an intervention by the antiskid regulating means at an axle is used as a criterion for the fact that inadmissible brake slip is occurring at this axle during the emergency braking.

4. The method as claimed in one of the preceding claims, **characterized in that** the emergency brake device (1) is actuated by a pressure medium and for at least one axle a deceleration-regulated emergency brake pressure or a deceleration-regulated pilot control pressure ($Cv_1$) is generated as a function of the deviation of the actual deceleration from the setpoint deceleration, and a further emergency brake pressure or a further pilot control pressure ($Cv_2$) is generated independently and in parallel therewith.

5. The method as claimed in one of the preceding claims, **characterized in that** the further emergency brake pressure or the further pilot control pressure ($Cv_2$) is load-corrected.

6. The method as claimed in claim 4 or 5, **characterized in that** the respective higher pressure of the deceleration-regulated emergency brake pressure or of the deceleration-regulated pilot control pressure ($Cv_1$) and of the further emergency brake pressure or of the further pilot control pressure ($Cv_2$) is used to generate the friction braking force at the at least one axle.

7. An emergency brake device (1) of a rail vehicle or of a rail vehicle train composed of a plurality of rail vehicles, which rail vehicle or rail vehicle train has a number of friction-braked axles, comprising at least the following:

   a) brake actuators for generating friction braking forces at the friction-braked axles during emergency braking,
   b) identification means for identifying at least one axle which has inadmissible brake slip during emergency braking and at which brake slip occurs outside a predefined optimum brake slip range,
   c) identification means for identifying at least one axle which has no, or admissible, brake slip during the emergency braking and by which a larger friction braking force can be transmitted than by the at least one friction-braked axle with inadmissible brake slip,
   d) sensor means for determining the actual deceleration of the rail vehicle or of the rail vehicle train during the emergency braking,
   e) an electronic control unit which actuates the brake actuator or the brake actuators at the at least one axle which has no, or admissible, brake slip during the emergency braking in such a way that by at least partially compensating the friction braking force which is lost at the at least one axle as a result of the inadmissible brake slip, a deviation of the actual deceleration of the rail vehicle or of the rail vehicle train from a setpoint deceleration predefined by the emergency braking request can be kept within a tolerable range.

8. The emergency brake device as claimed in claim 7, **characterized in that** said device comprises an antiskid regulating device, and **in that** an intervention by the antiskid regulating means at a friction-braked axle during emergency braking is used as a criterion for whether brake slip outside the predefined optimum brake slip range occurs at this friction-braked axle.

9. The emergency brake device as claimed in one of claims 7 or 8, **characterized in that** said device is actuated by a pressure medium and comprises, for at least one axle, a first valve device (2) which is controlled by the electronic control unit and which generates, for the at least one axle, a deceleration-regulated emergency brake pressure or a deceleration-regulated pilot control pressure ($Cv_1$) representing the latter as a function of the deviation of the actual deceleration from the setpoint deceleration.

10. The emergency brake device as claimed in claim 9, **characterized in that** the first valve device (2) contains at least one ventilating valve (4) which is connected to a pressure medium supply (R1) and a venting valve (8) which is connected to a pressure sink (6).

11. The emergency brake device as claimed in claim 9 or 10, **characterized in that** said device also comprises a second valve device (14) which is controlled by the electronic control unit and which generates, for the at least one axle, a further emergency brake pressure or a further pilot control pressure ($Cv_2$) representing the latter, independently of and in parallel with the deceleration-regulated emergency brake pressure or the deceleration-regulated pilot control pressure ($Cv_1$) representing the latter.

12. The emergency brake device as claimed in claim 9 or 10 and 11, **characterized in that** selection means (EDU; 28) are provided which, during emergency braking, pass on the higher emergency brake pressure or the higher pilot control pressure ($Cv_1$, $Cv_2$) of the deceleration-regulated emergency brake pressure or of the deceleration-regulated pilot control pressure ($Cv_1$) representing the latter and of the further emergency brake pressure or of the pilot con-

trol pressure ($Cv_2$) representing the latter.

**13.** The emergency brake device as claimed in claim 12, **characterized in that** the selection means contain at least one double non-return valve (28), to whose pressure inlet the deceleration-regulated emergency brake pressure or the deceleration-regulated pilot control pressure ($Cv_1$) and to whose further pressure inlet the further emergency brake pressure or the further pilot control pressure ($Cv_2$) is applied.

**14.** The emergency brake device as claimed in claim 12, **characterized in that** the selection means contain at least one relay valve device (EDU) with two pneumatic control inlets, wherein the deceleration-regulated pilot control pressure ($Cv_1$) is present at the one pneumatic control inlet (10), as a first control pressure, and the further pilot control pressure ($Cv_2$) is present as a second control pressure at the other pneumatic control inlet (16), and the relay valve device is designed to generate an emergency brake pressure for the at least one axle, independently of the respectively higher control pressure ($Cv_1$, $Cv_2$).

**Revendications**

**1.** Procédé de commande d'un dispositif (1) de frein d'urgence d'un véhicule sur rail ou d'un train de véhicules sur rail constitué de plusieurs véhicules sur rail, qui a un certain nombre d'essieux freinés par des freins à friction, un freinage d'urgence étant déclenché par une demande de frein d'urgence comportant au moins les stades suivants :

a) identification d'au moins un essieu à glissement de freinage inadmissible pendant le freinage d'urgence, pour lequel il se produit un glissement de freinage inadmissible en dehors d'une plage de glissement de freinage optimum donnée à l'avance,
b) identification d'au moins un essieu sans glissement de freinage ou à glissement de freinage dans une mesure admissible pendant le freinage d'urgence, par lequel peut être transmise une force de frein à friction plus grande que par le au moins un essieu à glissement de freinage inadmissible,
c) adaptation des forces de frein à friction au au moins un essieu sans glissement de freinage ou à glissement de freinage dans une mesure admissible de manière à ce que, par au moins une compensation partielle de la force de frein de friction perdue sur le au moins un essieu en raison du glissement de freinage inadmissible, l'on puisse, par cette adaptation, maintenir dans une plage tolérable un écart de la décélération réelle du véhicule sur rail ou du train de véhicules sur rail à une décélération de consigne donnée à l'avance par la demande de frein d'urgence.

**2.** Procédé suivant la revendication 1, **caractérisé en ce que** la compensation de la force de frein à friction perdue sur le au moins un essieu à glissement de freinage inadmissible s'effectue pendant le freinage d'urgence immédiatement après le stade b) ou encore pendant le freinage d'urgence, mais d'une durée définie à l'avance après le stade b).

**3.** Procédé suivant l'une des revendications précédentes, **caractérisé en ce qu'**on tire parti d'une intervention de la régulation d'anti-enrayage sur un essieu comme critère qu'il se produit sur cet essieu un glissement de freinage inadmissible pendant le freinage d'urgence.

**4.** Procédé suivant l'une des revendications précédentes, **caractérisé en ce que** l'on actionne le dispositif (1) de frein d'urgence par du fluide sous pression et on produit pour au moins un essieu, en fonction de l'écart de la décélération réelle à la décélération de consigne, une pression de frein d'urgence régulée en décélération ou une pression ($Cv_1$) pilote régulée en décélération ainsi que, indépendamment et parallèlement à cela, une pression de frein d'urgence ou une autre pression ($Cv_2$) pilote.

**5.** Procédé suivant l'une des revendications précédentes, **caractérisé en ce que** l'on corrige en charge l'autre pression de frein d'urgence ou l'autre pression ($Cv_2$) pilote.

**6.** Procédé suivant la revendication 4 ou 5, **caractérisé en ce qu'**on tire parti, pour la production de la force de frein à friction sur le au moins un essieu, de respectivement la pression la plus grande de la pression de fin d'urgence régulée en décélération ou de la pression ($Cv_1$) pilote régulée en décélération et de l'autre pression de frein d'urgence ou de l'autre pression ($Cv_2$) pilote.

**7.** Dispositif (1) de frein d'urgence d'un véhicule sur rail ou d'un train de véhicules sur rail constitué de plusieurs véhicules sur rail, qui a un certain nombre d'essieux freinés en friction, comprenant au moins ce qui suit :

a) des actionneurs de frein pour la production de forces de frein à friction sur les essieux freinés en friction pendant un freinage d'urgence,
b) des moyens d'identification d'au moins un essieu à glissement de freinage ou ayant inadmissible pendant un freinage d'urgence, pour lequel il se produit un glissement de freinage en dehors d'une plage de glissement de freinage optimum donnée à l'avance,

c) des moyens d'identification d'au moins un essieu sans glissement de freinage ou ayant un glissement de freinage dans une mesure admissible pendant le freinage d'urgence, essieu par lequel peut être transmise une force de frein à friction plus grande que par le au moins un essieu à glissement de freinage inadmissible et freiné en friction,

d) des moyens de capteur pour la détermination de la décélération réelle du véhicule sur rail ou du train de véhicule sur rail pendant le freinage d'urgence,

e) un appareil de commande électronique, qui commande l'actionneur de frein ou les actionneurs de frein sur le au moins un essieu sans glissement de freinage ou ayant un glissement de freinage dans une mesure admissible pendant le freinage d'urgence de manière à pouvoir, par au moins une compensation partielle de la force de frein à friction perdue par le glissement de freinage inadmissible sur le au moins un essieu, maintenir un écart de la décélération réelle du véhicule sur rail ou du train de véhicules sur rail à une décélération de consigne donnée à l'avance par la demande de frein d'urgence dans une plage tolérable.

8. Dispositif de frein suivant la revendication 7, **caractérisé en ce qu'**il comporte un dispositif d'anti-enrayage et **en ce que** l'intervention de l'anti-enrayage sur un essieu freiné en friction pendant un freinage d'urgence est mise à profit comme critère du point de savoir si se produit sur cet essieu freiné en friction un glissement de freinage en dehors de la plage de glissement de freinage optimum donnée à l'avance.

9. Dispositif de frein suivant l'une des revendications 7 ou 8, **caractérisé en ce qu'**il est actionné par du fluide sous pression et il comprend pour au moins un essieu un premier dispositif (2) de vanne, qui est commandé par le dispositif de commande électronique et qui produit pour le au moins un essieu, en fonction de l'écart de la décélération réelle à la décélération de consigne, une pression de frein d'urgence régulée en décélération ou une pression ($Cv_1$) pilote régulée en décélération la représentant.

10. Dispositif de frein suivant la revendication 9, **caractérisé en ce que** le premier dispositif de vanne comporte au moins une vanne (4) d'alimentation en air communiquant avec un réservoir (R1) de fluide sous pression, ainsi qu'une vanne (8) de purge communiquant avec un puits (6) de pression.

11. Dispositif de frein suivant la revendication 9 ou 10, **caractérisé en ce qu'**il comporte en outre un deuxième dispositif (14) de vanne, qui est commandé par le système de commande électronique et qui produit, pour le au moins un essieu, indépendamment et parallèlement à la pression de frein d'urgence régulée en décélération ou à la pression ($Cv_1$) pilote régulée en décélération la représentant, une autre pression de frein d'urgence ou une autre pression ($Cv_2$) pilote la représentant.

12. Dispositif de frein suivant les revendications 9 ou 10 et 11, **caractérisé en ce qu'**il est prévu des moyens (EDU ;28) de sélection qui, pendant un freinage d'urgence, continuent à commander la pression de frein d'urgence la plus grande ou la pression ($Cv_1$, $Cv_2$) pilote la plus grande parmi la pression de frein d'urgence régulée en décélération ou la pression ($Cv_1$) pilote régulée en décélération la représentant et l'autre pression de frein d'urgence ou la pression ($Cv_2$) pilote la représentant.

13. Dispositif de frein suivant la revendication 12, **caractérisé en ce que** les moyens de sélection comprennent au moins un clapet antiretour (28) double, par lequel une entrée de pression peut être soumise à la pression de frein d'urgence régulée en décélération ou à la pression ($Cv_1$) pilote régulée en décélération et son autre entrée de pression à l'autre pression de frein d'urgence ou à l'autre pression ($Cv_2$) pilote.

14. Dispositif de frein suivant la revendication 12, **caractérisé en ce que** les moyens de sélection comportent au moins un dispositif (EDU) de vanne relais ayant deux entrées de commande pneumatiques, dans lequel, sur l'une des entrées (10) de commande pneumatique s'applique la pression ($Cv_1$) pilote régulée en décélération comme première pression de commande et sur l'autre entrée (16) de commande pneumatique l'autre pression ($Cv_2$) pilote comme deuxième pression de commande et le dispositif de vanne relais est constitué pour produire, en fonction de la pression ($Cv_1$, $Cv_2$) de commande la plus grande, une pression de frein d'urgence pour le au moins un essieu.

EP 2 648 949 B1

FIG.1

FIG.2

13

FIG.3

**EP 2 648 949 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004046442 A1

- DE 102004024462 A1